# EUROPEAN PATENT APPLICATION

(11) **EP 2 474 776 A1**
(43) Date of publication of application: **11.07.2012**
(21) Application number: 10813752.2
(22) Date of filing: 02.09.2010
(51) Int. Cl.: F21S 2/00, F21V 7/10, G09F 13/04, F21Y 101/02

(54) **LIGHT SOURCE DEVICE, ILLUMINATION DEVICE, AND DISPLAY DEVICE**

(30) Priority: 02.09.2009 JP 2009203064
(71) Applicant: Opto Design, Inc., Hachioji-shi, Tokyo 192-0364 (JP)
(72) Inventor: SATO, Eiichi, Hachioji-shi Tokyo 192-0364 (JP); FUKUOKA, Kenji, Fussa-shi Tokyo 197-0013 (JP); SATO, Hiroyasu, Hachioji-shi Tokyo 192-0364 (JP)
(74) Representative: HOFFMANN EITLE
(86) International application number: PCT/JP2010/064987
(87) International publication number: WO 2011/027804

(57) **Abstract**

Disclosed is a light source device (4) capable of being used by adjacently connecting with each other in multiple, the light source device includes: a point light source (5) having high directionality; a box-shaped housing (6) having a bottom to center of which the point light source is fixed, sidewall portions arranged in a standing manner from edges of the bottom up to a predetermined height, a side portion defining an opening provided facing the point light source, and a reflection member forming an inner wall surface of the housing; and a transmissive/reflective plate covering the opening of the housing and being fixed at a circumference thereof to edges of the opening of the housing. At least one of the sidewall portions that is in contact with a sidewall portion of another light source device is arranged in a standing manner at an angle θ, where 90° < θ ≤ 150°, relative to the bottom, and is provided with a light-transmitting hole on the side of the opening of the housing.

## Description

### TECHNICAL FIELD

The present invention relates to a light source device, an illumination device, and a display device, and more in detail, to a light source device, an illumination device, and a display device that can provide an illumination light having a uniform illuminance distribution with light from a point light source, even if the point light source have high directionality and are used as light sources arranged on a convex curved surface such as an outer wall surface of a cylinder.

### BACKGROUND ART

In recent years, there are increasing examples of advertisements provided on surfaces of cylinders placed in spaces such as railway station yards and underground shopping malls. Although these advertisements have previously been mainly displayed as posters, there are also increasing examples of internally illuminated signs installed in a manner surrounding the cylinders.

In recent years, research and development of light-emitting diode (hereinafter called "LED") have rapidly advanced. Thus, various types of LEDs have been developed and put on the market, and are used in a wide range of fields. These LEDs are used, by virtue of features thereof such as low power consumption, long life, and small size, in many applications such as backlights for liquid crystal panels, as well as various types of display plates, electric bulletin boards, decorative illuminating devices, and illumination devices.

A surface light source that emits light uniformly is required as a light source device used in such display devices and the like. An LED, however, is not suitable to be used without change in display devices or the like because of high directionality of light emitted therefrom. Therefore, as a conventional light source device for providing a surface illumination light having a uniform illuminance distribution, there is known a device that is provided on a light radiating surface thereof with reflecting means so as to reflect light multiple times.

For example, Patent Document 1 listed below discloses an invention of a surface lighting light source device that can provide, even by using a highly directional light source such as an LED, a uniform illumination light over a wide area without increasing a thickness in a direction of radiation of an LED, and of a surface illumination device using the light source device.

The surface lighting light source device described in Patent Document 1 listed below is comprised of a highly directional light-emitting source, a light guide body having a radiating surface in a direction of radiation of the light-emitting source, and a casing that is provided around the light-emitting source and closes surfaces other than the radiating surface of the light guide body. In the surface lighting light source device, inside reflecting means is provided entirely between the casing and the light guide body, and radiating side reflecting means is provided on the radiating surface so as to reflect the light from the light-emitting source at a predetermined ratio. Side faces of the casing need not be perpendicular to a back face thereof, but the casing has a shape in which the side faces widen upward. In the surface illumination device formed by arranging in a matrix a large number of the surface lighting light source devices having a casing of such a shape, an excess space is formed between adjacent casings. Therefore, the excess space can be used for applications such as structural members and electrical wiring.

The light source device described above, however, has had the following problem. That is, a surface illumination light having a uniform illuminance distribution can be obtained when the light source device is used as a single unit, whereas when a plurality of such light source devices are adjacently connected to form a large-size surface illumination device, adjacently connected portions of the light source devices are dark, and thus it is impossible to obtain an illumination light that is uniform all over a light output surface of the illumination device. In order to solve this problem, there is also known a structure in which holes are provided at sidewall portions corresponding to the adjacently connected portions of the light source devices so that the adjacently connected portions of the light source devices are not darkened, thus providing an illumination light that is uniform all over the light output surface of the illumination device.

For example, Patent Document 2 listed below discloses an invention of a surface lighting unit and a surface illumination device that enable efficient use of the surface lighting unit when the surface illumination device is comprised of a plurality of such surface lighting units. Note that Patent Document 2 listed below is a publication of the patent application filed by the applicant of the present application. The surface lighting unit and the surface illumination device disclosed in Patent Document 2 listed below will be described below with reference to Fig. 14. Note that Fig. 14 is an enlarged sectional view of a boundary area of two surface lighting light source devices in the surface illumination device.

A surface illumination device 20 is structured by arranging in a matrix a plurality of surface lighting light source devices 21, each using a surface lighting unit 22. The surface lighting light source device 21 is arranged with a light source 23 at the center of a bottom surface portion of the surface lighting unit 22. The surface lighting unit 22 is provided with a casing having the bottom surface portion 24 and a sidewall portion 25 arranged in a standing manner from the bottom surface portion 24, and an reflector 26 that is arranged at a predetermined distance apart from the bottom surface portion 24 in a direction of radiation of light. The surface lighting unit 22 has a box shape as a whole.

The bottom surface portion 24 and the sidewall portion 25 are provided on the inside thereof with reflecting surfaces having a function to reflect light. A surface of the reflector 26 facing the bottom surface portion is also provided with a reflecting surface. The reflector 26 is provided with openings 27 such as grooves and holes for adjusting a reflection amount of light (or a transmission amount of light) from the light source. The openings 27 are formed by cutting through the reflector 26 with a cutting plotter or the like. The sidewall portion 25 of the surface lighting unit 22 is provided with holes 28 (sidewall holes) continuing to the openings 27 of the reflector 26.

### PRIOR ART DOCUMENTS

### PATENT DOCUMENTS

Patent Document 1: Japanese Patent Application Publication No. 2008-027886
Patent Document 2: Japanese Patent Application Publication No. 2009-110696 (paragraphs [0018], [0019], [0032], and [0066], and Fig. 8)

### SUMMARY OF THE INVENTION

### PROBLEMS TO BE SOLVED BY THE INVENTION

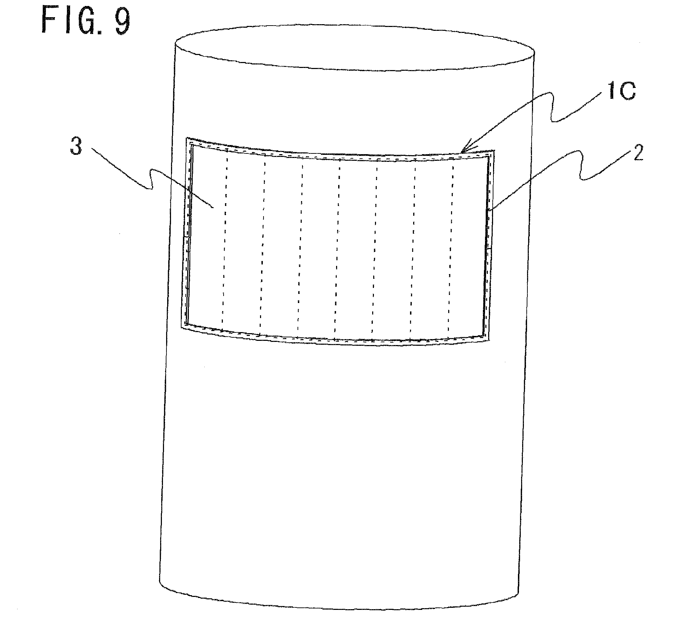

As disclosed in Patent Document 2 described above, in conventional surface illumination devices, position A (refer to Fig. 9) above the boundary area of the surface lighting light source device is a place that is hardly reached by light due to the existence of the sidewall portion, and thus is dark. As a result, uniform illumination has not been obtained. By contrast, in the surface illumination device disclosed in Patent Document 2, the sidewall portion of the surface lighting unit is also provided with the holes (sidewall holes) continuing from round holes of the reflector. Therefore, by virtue of the light passing through the sidewall holes, even the position above the sidewall portion receives a sufficient amount of light, and thus a totally uniform illumination light can be obtained.

In the surface illumination device disclosed in Patent Document 2, an illumination light having a uniform illuminance distribution can be obtained when the light source devices are arranged on one flat surface. When the light source devices are arranged on a convex curved surface or the like, however, the portions corresponding to the adjacently connected portions of the light source devices expand, and thus are darkened. Therefore, it is difficult to obtain an illumination light that is uniform all over the light output surface of the illumination device. That is, not only the surface illumination device disclosed in Patent Document 2 but also conventional light source devices are designed so that the illuminance distribution is uniform in an area corresponding to the light output surface directly above the light source device, at a predetermined distance in the vertical direction from the light output surface. When such light source devices are arranged on a convex curved surface or the like, however, only an insufficient illuminance can be obtained in the adjacently connected portion on the convex curved surface even if the illuminance distribution directly above the light source device is uniform. As a result, the adjacently connected portions have been dark.

It is an object of the present invention to provide a light source device and a display device that can prevent the adjacently connected portions from being darkened and can provide an illumination light having a uniform illuminance distribution as a whole, even if light from a point light source having high directionality is used and the point light sources are arranged on a convex curved surface or the like.

### MEANS FOR SOLVING THE PROBLEMS

In order to solve the above-described problem, a light source device of the present invention capable of being used by adjacently connecting with each other in multiple, the light source device includes: a point light source having high directionality; a box-shaped housing having a bottom to center of which the point light source is fixed, sidewall portions arranged in a standing manner from edges of the bottom up to a predetermined height, a side portion defining an opening provided facing the point light source, and a reflection member forming an inner wall surface of the housing; and a transmissive/reflective plate covering the opening of the housing and being fixed at a circumference thereof to edges of the opening of the housing, at least one of the sidewall portions that is in contact with a sidewall portion of another light source device is arranged in a standing manner at an angle θ, where 90° < θ ≤ 150°, relative to the bottom, and is provided with a light-transmitting hole on the side of the opening of the housing.

Note that the term "transmissive/reflective" in the light source device of the present invention is used to mean that some part of light is transmitted but the remaining part of light is reflected.

In the light source device of the present invention, at least one of the housing sidewall portions forms the angle θ, where 90° < θ ≤ 150°, relative to the bottom. In the case in which the light source devices whose bottoms are not on the same flat surface are adjacently connected with each other, if the sidewall portions having the angle θ, where 90° < θ ≤ 150°, are arranged so as to be in contact with each other, the transmissive/reflective plates of the light source devices are arranged without a space therebetween. Therefore, an adjacently connected portion of the light source devices is hardly darkened. In addition, because the housing sidewall portion is provided with the hole on the side of the opening of the housing, an optical transmittance at the sidewall portion of the light source device is higher than that of conventional light source devices. Therefore, a wider area above the light source device can be uniformly illuminated than in the case of conventional light source devices. As a result, with the light source device of the present invention, the area above the adjacently connected portion is not darkened even when a plurality of such light source devices are adjacently connected with each other.

In the light source device of the present invention, it is preferable that a first pair of opposed sidewall portions out of the sidewall portions be arranged in a standing manner at an angle θ, where 90° < θ ≤ 150°, relative to the bottom, a second pair of opposed sidewall portions adjacent to the first pair of opposed sidewall portions be arranged in a standing manner at an angle of 90° or more relative to the bottom, and the first pair of opposed sidewall portions and the second pair of opposed sidewall portions be each provided with the light-transmitting hole on the side of the opening of the housing.

In the light source device of the present invention, the pair of opposed sidewall portions form the angle θ, where 90° < θ ≤ 150°, relative to the bottom, and the opening of a wide area is provided. Therefore, the adjacently connected portion is prevented from darkening even when a plurality of such light source devices are adjacently connected with each other on a convex curved surface curved in one direction such as a sidewall surface of a cylinder, or on a polygonal column such as a regular triangular column or a quadrangular column.

In the light source device of the present invention, it is preferable that an area of the light-transmitting hole be proportional to the angle θ relative to the bottom, and increase as the angle θ increases.

In general, the adjacently connected portion of the adjacent light source devices becomes likely to produce a portion therein that is prone to be darkened as the angle θ of the sidewall portion relative to the bottom increases. With the light source device of the present invention, however, the light-transmitting hole of a wider area is provided in the sidewall portion of which the angle θ is large. Therefore, the adjacently connected portion can be prevented from darkening.

In the light source device of the present invention, it is also preferable that the transmissive/reflective plate include a plate-shaped body that is provided on the side facing the point light source with a center transmissive/reflective portion and an outer transmissive/reflective portion around the center transmissive/reflective portion, the center transmissive/reflective portion and the outer transmissive/reflective portion be provided to have a high reflectance and a low transmittance, the outer transmissive/reflective portion be provided with a plurality of light-transmitting portions penetrating the transmissive/reflective plate, the plurality of light-transmitting portions in the outer transmissive/reflective portion be each a hole having a predetermined diameter or a slit having a predetermined width and length, and the size of the hole or the width and length of the slit increase as the hole or the slit departs outward from the center transmissive/reflective portion.

In the light source device of the present invention, because the highly directional light from the point light source advances while repeating to be reflected from the center transmissive/reflective portion to the outer transmissive/reflective portion, the light intensity is decreased as the light goes outward away from the center transmissive/reflective portion. With the surface lighting light source device of the present invention, the size of the hole or the width and length of the slit in the outer transmissive/reflective portion gradually increases as the hole or the slit departs outward from the center transmissive/reflective portion. Therefore, the amount of light output through the light-transmitting portions increases as the location departs outward from the center transmissive/reflective portion, and thereby, an illumination light having a more uniform illuminance distribution can be obtained. Note that any shape, such as a circular shape, an oval shape, a polygonal shape, and a star shape, can be employed as a shape of the hole of the light-transmitting portion, and in the case of a polygonal shape, the shape may be not only a regular polygonal shape but also a polygonal shape other than the regular polygonal shape.

In the light source device of the present invention, it is also preferable that the transmissive/reflective plate include a light reflective/diffusive/transmissive member.

When the transmissive/reflective plate includes the light reflective/diffusive/transmissive member, the light transmitted through the transmissive/reflective plate does not go straight but is diffused. As a result, with the light source device of the present invention, an illumination light having a more uniform illuminance distribution can be obtained.

In the light source device of the present invention, it is also preferable that the transmissive/reflective plate include an ultrafinely foamed optical reflection member.

With the ultrafinely foamed optical reflection member, it is possible to obtain light diffused in all directions more uniformly than in the case where, for example, light-scattering particles are dispersed in plastic material. As a result, with the surface lighting light source device of the present invention, an illumination light having a more uniform illuminance distribution can be obtained. In addition, because the ultrafinely foamed optical reflection member is lightweight, the increase of the weight of the light source device can be suppressed even if the light source device is increased in size.

In the light source device of the present invention, it is also preferable that the housing and the transmissive/reflective plate be integrally formed from one sheet of base plate.

With the light source device of the present invention, the housing and the transmissive/reflective plate can be manufactured simply and at a low cost by integrally forming them from the same material.

In the light source device of the present invention, it is also preferable that the opening of the housing be further provided on the light output side of the transmissive/reflective plate with a light diffusing plate in a manner covering the opening of the housing at a predetermined distance from the transmissive/reflective plate.

In the light source device of the present invention, although the predetermined functions and effects described above can be achieved even if the transmissive/reflective plate is exposed, an illumination light having a more uniform illuminance distribution can be obtained by using the diffusing plate having a uniform light scattering function. Note that it is possible to use as the diffusing plate a plate having shapes such as a large number of arrayed lens shapes, pyramid shapes, or column shapes, and cyclically scattering light in certain directions.

In the light source device of the present invention, the point light source may be a light-emitting diode (LED) or a laser diode (LD).

Both an LED and an LD are well-known point light sources that have high directionality and high luminescence intensity. Therefore, with the surface lighting light source device of the present invention, a bright light source device can be obtained even if the device has a large size.

In addition, in order to achieve the above-described objective, an illumination device of the present invention is structured by connecting a plurality of any one of the light source devices described above so that the sidewall portions forming the same angle θ relative to the bottom are in contact with each other.

With the illumination device of the present invention, the plurality of light source devices are adjacently connected so that the sidewall portions forming the same angle θ relative to the bottom are in contact with each other. An illumination device having a uniform illuminance distribution can be thus obtained, in which a bottom of the illumination device has a shape fitting along any installation surface, and moreover, the adjacently connected portions of the light source devices are not darkened.

In the illumination device of the present invention, it is preferable that each of the light source devices have a regular polygonal shape for the bottom and the transmissive/reflective plate thereof, and a plurality of such light source devices constitute the illumination device by being adjacently connected with each other to form a regular polyhedral shape, a spherical surface shape, or a spherical shape.

With the illumination device of the present invention, the plurality of light source devices are adjacently connected to form a regular polyhedral shape, a spherical surface shape, or a spherical shape. A spherical-shaped illumination device having a uniform illuminance distribution can be thus obtained, in which the adjacently connected portions of the light source devices are not darkened.

Also in the illumination device of the present invention, it is preferable that each of the light source devices have a rectangular shape for the bottom and the transmissive/reflective plate thereof, a plurality of such point light sources be arranged at predetermined intervals on the center line along the longitudinal direction of the bottom, and the plurality of light source devices constitute the illumination device by being adjacently connected with each other in a lateral direction to form a semicircular shape or a cylindrical shape so that the longitudinal direction of the light source devices corresponds to the vertical direction.

With the illumination device of the present invention, the plurality of point light sources are arranged in one light source device. A light source device having a larger illumination area can be thus obtained. In addition, the light source device can have a simplified structure with a reduced number of parts, and can be manufactured easily at reduced manufacturing cost.

Furthermore, in order to achieve the above-described objective, a display device of the present invention has a display plate provided at an outer side of the transmissive/reflective plate or the diffusion plate of the above-described illumination device.

With the display device of the present invention, a display device having a uniform illuminance distribution can be obtained, in which the adjacently connected portions of the light source devices are not darkened.

### BRIEF DESCRIPTION OF THE DRAWINGS

[Fig. 1] Fig. 1 is a front view illustrating a state in which an illumination device according to a first embodiment of the present invention is installed on a cylinder.
[Fig. 2] Fig. 2A is a cross-sectional view of the illumination device, taken on line IIA-IIA of Fig. 1, and Fig. 2B is a partial enlarged view of Fig. 2A.
[Fig. 3] Fig. 3A is a cross-sectional view of three adjacently connected light source devices constituting the illumination device of Fig. 1, and Fig. 3B is a cross-sectional view in the case in which the light source devices of Fig. 3A are arranged on one flat surface.
[Fig. 4] Fig. 4 is a perspective view of the light source device of Fig. 3A.
[Fig. 5] Fig. 5 is an exploded perspective view of the light source device of Fig. 4.
[Fig. 6] Fig. 6A is a side view of the light source device of Fig. 4 as viewed from the X direction, and Fig. 6B is a side view of the same device as viewed from the Y direction.
[Fig. 7] Fig. 7 is a development view of a housing and a transmissive/reflective plate of the light source device of Fig. 4.
[Fig. 8] Fig. 8 is a cross-sectional view of an illumination device according to a second embodiment of the present invention.
[Fig. 9] Fig. 9 is a front view illustrating a state in which an illumination device according to a third embodiment of the present invention is installed on a cylinder.
[Fig. 10] Fig. 10 is a perspective view of a light source device constituting the illumination device of Fig. 9.
[Fig. 11] Fig. 11 is an exploded perspective view of the light source device of Fig. 10.
[Fig. 12] Fig. 12 is a perspective view of an illumination device according to a fourth embodiment of the present invention.
[Fig. 13] Fig. 13 illustrates a variation of a light source device constituting the illumination device of Fig. 12.
[Fig. 14] Fig. 14 is a partial cross-sectional view of a surface illumination device of a related art.

### BEST MODE(S) FOR CARRYING OUT THE INVENTION

Embodiments of the present invention will be described below with reference to the accompanying drawings. It should be noted that the embodiments presented below are for exemplifying a light source device, an illumination device, and a display device for realizing the technological concept of the present invention, and are not intended to limit the present invention to the light source device, the illumination device, and the display device exemplified below, but can be equally applied to other embodiments included in the scope of the claims.

### [First Embodiment]

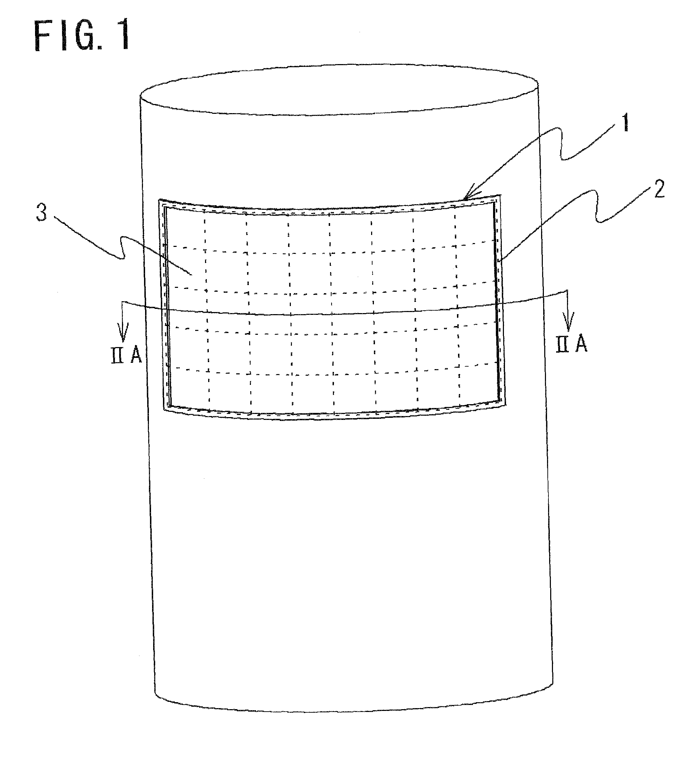

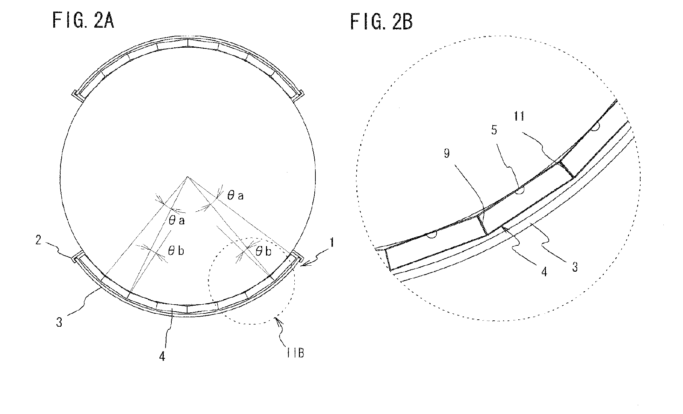

An illumination device according to a first embodiment of the present invention will be described using Figs. 1 and 2. Fig. 1 is a perspective view of the illumination device according to the first embodiment of the present invention. Fig. 2A is a cross-sectional view of the illumination device, taken on line IIA-IIA of Fig. 1, and Fig. 2B is a partial enlarged view of Fig. 2A.

As illustrated in Figs. 1 and 2, an illumination device 1 is composed of a frame 2 installed on a convex curved surface such as a side face of a cylinder, a diffusion plate 3 inserted in an opening of the frame 2, and a plurality of light source devices 4 arranged in an adjacently connected manner inside the frame.

The frame 2 is formed of metallic sheet material or a plastic molded body, and has a shape fitting along the convex curved surface such as a side face of a cylinder. The diffusion plate 3 is inserted in the opening of the frame 2. The diffusion plate 3 need only be made of material that scatters light uniformly. The material can be, for example, milky white sheet, frosted glass, or Japanese paper. It is also possible to use a plate having shapes such as a large number of arrayed lens shapes, pyramid shapes, or column shapes, and cyclically scattering light in certain directions. In the illumination device of the present embodiment, the diffusion plate 3 is provided at an outer side of the light source devices for common use for the light source devices. If the diffusion plate is replaced with a display plate or if a display plate is additionally provided at an outer side of the diffusion plate, the illumination device can be used as a display device. A plate or Japanese paper sheet on which drawings, characters, or patterns are drawn can be used as the display plate.

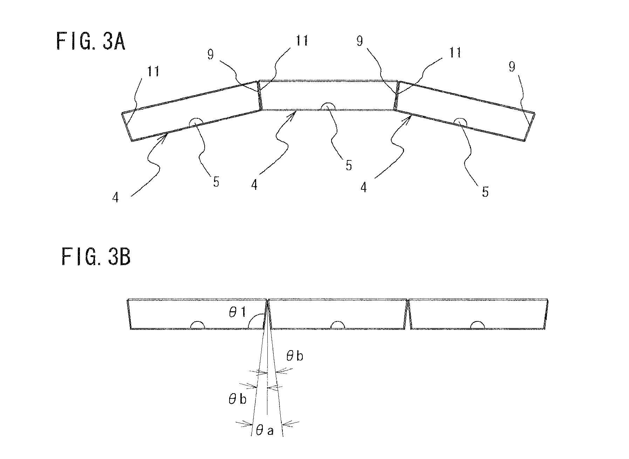

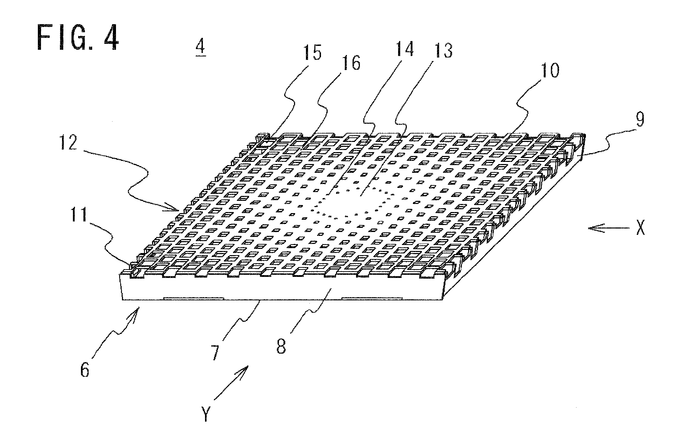

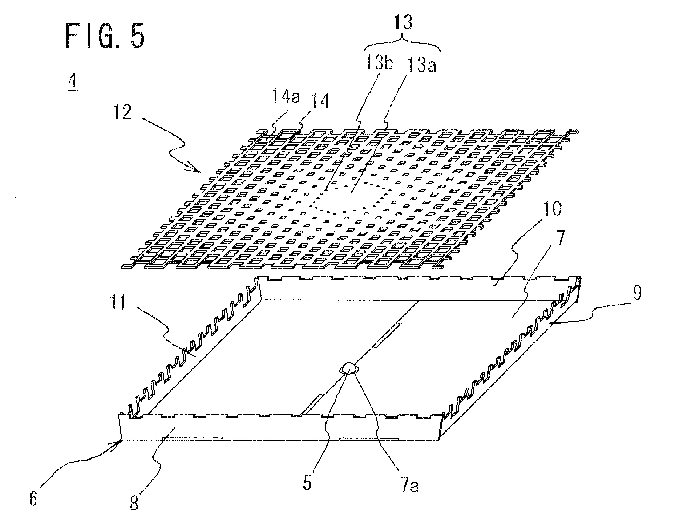

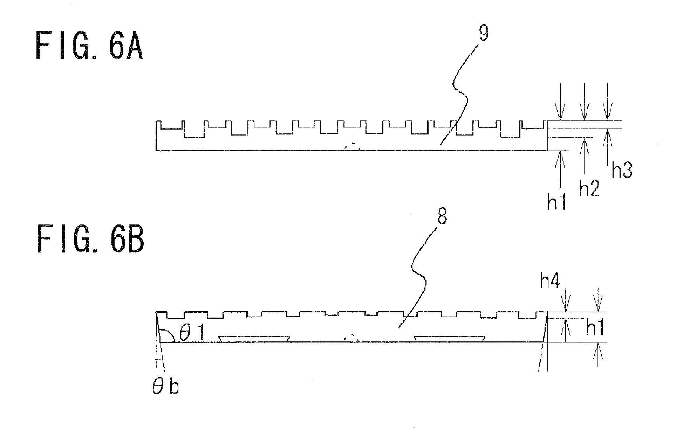

Inside the frame 2, the plurality of light source devices are adjacently connected with each other in the circumferential direction and the height direction of the cylinder without a space between the devices. A single piece of the light source device 4 will be described below using Figs. 3 to 6. Fig. 3A is a cross-sectional view of three adjacently connected light source devices constituting the illumination device of Fig. 1, and Fig. 3B is a cross-sectional view in the case in which the light source devices of Fig. 3A are arranged on one flat surface. Fig. 4 is a perspective view of the light source device of Fig. 3A. Fig. 5 is an exploded perspective view of the light source device of Fig. 4. Fig. 6A is a side view of the light source device of Fig. 4 as viewed from the X direction, and Fig. 6B is a side view of the same device as viewed from the Y direction.

As illustrated in Figs. 4 to 6, the light source device 4 is provided with a point light source 5 having high directionality and a box-shaped housing 6 to whose center portion the point light source 5 is fixed. The point light source 5 is an LED having one or a plurality of light-emitting elements. An LD can be used instead of the LED.

The housing 6 has a bottom 7, sidewall portions 8 to 11, and an opening 6a. A mounting hole 7a for mounting the point light source 5 is provided at the center of the bottom 7. Note that the bottom 7 may serve as a ceiling surface or a sidewall surface depending on the installation state of the housing. The housing 6 is formed of a material, such as a ultrafinely foamed optical reflection member, having a high optical reflectance. Thus, light from the point light source 5 can be reflected at an inner wall surface of the housing with the high optical reflectance so as to use the light efficiently.

The light source devices 4 are arranged without a space therebetween on the outer wall surface of the cylinder as illustrated in Fig. 2. At this time, a pair of opposed sidewall portions 8 and 10 in parallel with the circumferential direction of the cylinder are arranged in a standing manner at an angle of 90° relative to the bottom, and the sidewall portions of the adjacent light source devices firmly come in contact with each other without a space therebetween. Note that this angle can be larger than 90°. When the angle of a pair of opposed sidewall portions relative to the bottom is larger than 90°, as illustrated in Fig. 3B, the sidewall portions of the adjacent light source devices come in contact with each other at ends on the side of the openings, and a space is provided at ends on the side of the bottoms. It is possible to arrange, for example, wiring (not depicted) of the light source devices in this space.

A pair of opposed sidewall portions 9 and 11 in parallel with the height direction of the cylinder are arranged in a standing manner at an angle θ1, where 90° < θ1 < 135°, relative to the bottom, as illustrated in Figs. 2 and 3. This angle is determined depending on a radius of the cylinder and a length L of the sidewall portions in parallel with the height direction of the cylinder as follows.

Denoting a center angle of the cylinder on the light source device as θa, and a half angle of the center angle θa as θb, an angle θ1 of the sidewall portion relative to the housing bottom is given as θ1 = 90° + θb. The angle θb decreases as the size of the light source devices placed around the cylinder is reduced and as the number of the light source devices is increased. That is, the angle θ1 becomes close to 90°.

As illustrated in Fig. 6, the sidewall portions 8 to 11 are provided, at the ends on the opening side thereof, with transmitting holes that continue from ends of a transmissive/reflective plate 12 to be described later.
The area of the holes of the sidewall portions is larger as the angle of the sidewall portions relative to the bottom is larger.

A height from the housing bottom 7 to the transmissive/reflective plate 12, that is, a height of the sidewall portions is denoted as h1. The sidewall portions 8 and 10 forming an angle of 90° relative to the bottom are provided with transmitting holes having a constant height h4, and the sidewall portion 9 and 11 forming an angle larger than 90° relative to the bottom are provided with transmitting holes having a height h2 and transmitting holes having a height h3 in an alternate manner. The relation among the heights is given as h4 ≤ h3 < h2 < h1. Thus, by providing the transmitting holes that have predetermined areas corresponding to the angles of the sidewall portions at the ends on the opening side of the sidewall portions, the adjacently connected portions are prevented from darkening even when the plurality of light source devices are adjacently connected with each other on a convex curved surface such as the sidewall surface of a cylinder. Note that the transmitting holes of the sidewall portions may be provided separately in an independent manner without being continued to the transmitting holes of the transmissive/reflective plate.

The opening 6a of the housing 6 is covered with the transmissive/reflective plate 12. In the present embodiment, the transmissive/reflective plate 12 is formed of a material, such as the ultrafinely foamed optical reflection member, having a high optical reflectance and a low optical transmittance. With this arrangement, the light from the point light source 5 can be reflected to the inside of the housing 6 at a high optical reflectance to be efficiently used. In addition, a certain amount of light is transmitted through a portion directly above the point light source 5. Therefore, the portion directly above the LED is not left too dark. Moreover, because the ultrafinely foamed optical reflection member is lightweight, the increase of the weight of the surface illumination device can be suppressed even if the surface illumination device is increased in size. Furthermore, because the ultrafinely foamed optical reflection member is easily available and relatively inexpensive, the increase of the cost can be suppressed even when a large-size surface illumination device is produced.

As illustrated in Fig. 5, the transmissive/reflective plate 12 is provided with a center transmissive/reflective portion 13 located directly above the point light source 5, and an outer transmissive/reflective portion 14 around the outer perimeter of the center transmissive/reflective portion 13. A central part 13a is provided in a central portion of the center transmissive/reflective portion 13, that is, in the portion directly above the point light source 5. The central part 13a is formed to have a high optical reflectance and reflects the intense light emitted from the point light source 5. The light thus reflected is further reflected multiple times by the inner wall surface of the housing and the transmissive/reflective plate 12. The optical reflectance of the central part 13a is appropriately set by selecting an reflective plate material and processing the material (for example, forming half grooves or adjusting the plate thickness). Accordingly, light can be efficiently used. A peripheral part 13b is provided at the periphery of the central part 13a, that is, at the boundary thereof with the outer transmissive/reflective portion 14. The peripheral part 13b is provided with small holes and is designed to have the highest optical reflectance after that of the central part 13a while allowing part of the light to pass through the peripheral part 13b. Note that the small holes may be replaced with slits or fine grooves.

The outer transmissive/reflective portion 14 is formed with rectangular-shaped transmitting holes 14a at predetermined intervals. The size of the transmitting hole 14a gradually increases as the hole departs outward from the center transmissive/reflective portion. Note that the transmitting hole 14a can have various shapes, such as a circular shape, a triangular or quadrangular shape, and a star shape. Instead of the transmitting holes 14a, concentric ring-shaped or square-shaped slits may be provided, and the width and length of the slit may be increased as the slit departs outward from the center transmissive/reflective portion 13.

The transmissive/reflective plate may be provided by using a printing or a vapor deposition process to attach a film provided with a reflecting portion onto a light-transmitting member such as a transparent plate. In this case, the peripheral part of the center transmissive/reflective portion and the outer transmissive/reflective portion are provided with reflective dots instead of the transmitting holes or the slits, so as to set the optical reflectance and the optical transmittance to appropriate values. The pattern of the reflective dots can be the same as that of the transmitting holes 14a, or any other pattern. The shape of the reflective dots can be circular, square, or other in the same manner as the transmitting holes.

By using a printing or a vapor deposition process to provide the transmissive/reflective plate, it is possible to use existing equipment and easily produce the transmissive/reflective plate in large quantity. Therefore, the increase of the cost can be suppressed when the transmissive/reflective plate is produced in large quantity.

The transmissive/reflective plate 12 is fixed to the ends of the sidewall portions 8 to 11 on the side of the opening 6a. In the present embodiment, a part corresponding to the housing 6 and the transmissive/reflective plate 12 is cut out from one plate body, and then bent to form integrally a final body.

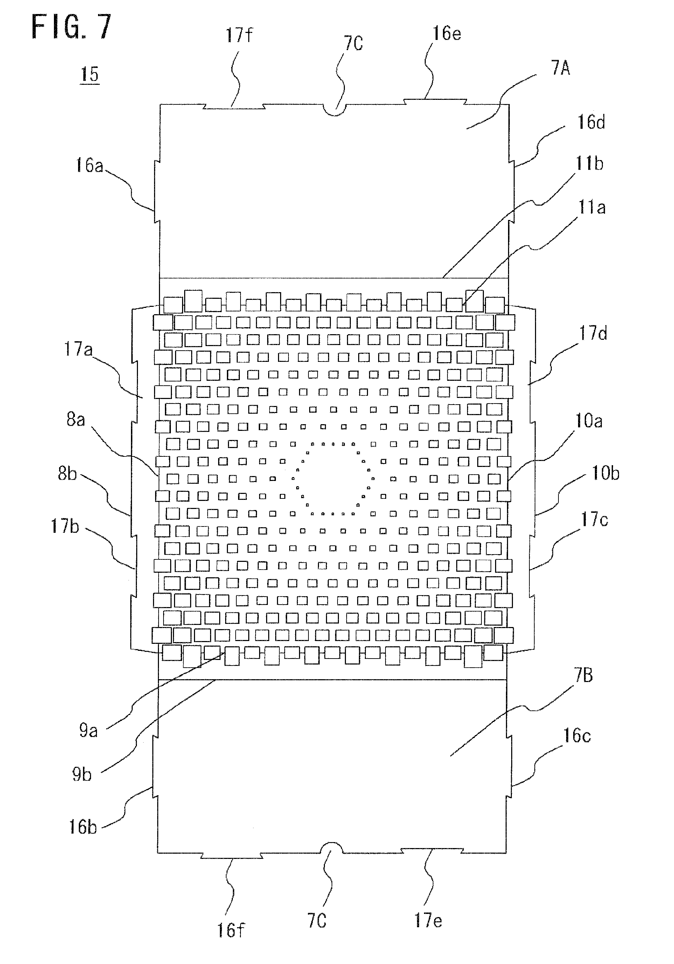

Fig. 7 is a development view of a light source unit 15 composed of the housing 6 and the transmissive/reflective plate 12. The light source unit 15 is formed of a material, such as the ultrafinely foamed reflective member, having a high optical reflectance and a low optical transmittance. The sidewall portions 8 to 11 are formed so as to be in contact, at the ends 8a to l1a on the opening side thereof, with the ends of the transmissive/reflective plate 12, and the transmitting holes are punched out so as to continue from the transmissive/reflective plate 12 to the ends 8a to 11a. In addition, a part 7B corresponding to one half of the bottom 7 is formed on the side of an end 9b on the bottom side of the sidewall portion 9, and a part 7A corresponding to the other half of the bottom 7 is formed on the side of an end 11b on the bottom side of the sidewall portion 11.

The bottom parts 7A and 7B are provided at ends thereof with respective halves 7C of a mounting hole 7a for arranging the point light source 5. The bottom 7 and the sidewall portions 8 to 11 are formed with engaging claws 16a to 16f and engaging grooves 17a to 17f. The ends 8a to 11a on the opening side of the sidewall portions and the ends 9b and 11b on the bottom side that serve as bent portions are formed with grooves on surfaces to form the outside of the housing after assembly. The light source unit 15 is bent along the grooves, and the engaging claws 16a to 16f are inserted into the engaging grooves 17a to 17f. Thus, the light source unit 15 is assembled. As described above, the light source unit 15 composed of the housing 6 and the transmissive/reflective plate 12 is cut out from one plate body and formed in an integral manner. Thus, the light source unit 15 can be produced simply and at low cost. It should be noted that the housing 6 and the transmissive/reflective plate may be formed separately, and the transmissive/reflective plate 12 may be fixed to the ends of the sidewall portions 8 to 11 on the side of the opening 6a of the housing 6 by using any method.

### [Second Embodiment]

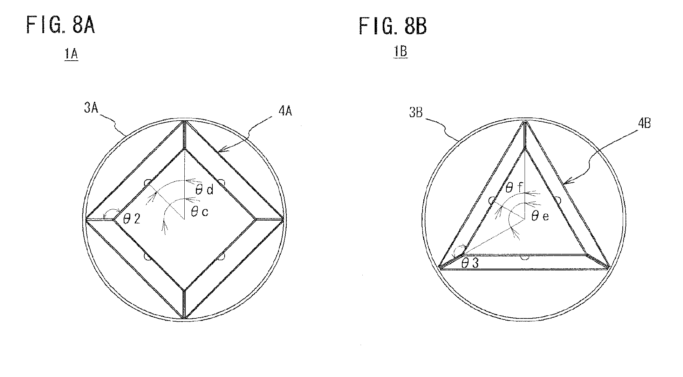

An illumination device according to a second embodiment of the present invention will be described using Fig. 8. Each of Figs. 8A and 8B is a cross-sectional view of the illumination device according to the second embodiment of the present invention corresponding to Fig. 2A.

The illumination device according to the second embodiment of the present invention is structured to have one light source device arranged at each one of sidewall surfaces of a polygonal column, and a cylindrical diffusing plate provided outside of the light source devices. As illustrated in Fig. 8A, an illumination device 1A is arranged with one light source device 4A in each direction perpendicular to a height direction of a quadrangular column, and sidewall portions of the light source devices 4A are adjacently connected so as to be in contact with each other. That is, in a transverse plane of the illumination device 1A, four of the light source devices 4A are adjacently connected. Note that one or multiple ones of the light source devices 4A are arranged in the height direction of the quadrangular column. A cylindrical diffusing plate 3A is provided outside of the light source devices 4A. Because the light source devices 4A and the diffusing plate 3A share structures thereof with the light source device 4 and the diffusing plate 3 according to the first embodiment, detailed descriptions thereof are omitted. In the light source device 4A, a central angle θc of the quadrangular column is 90°; a half angle θd of the central angle is 45°; and, an angle θ2 of the sidewall portion in parallel with the height direction of the quadrangular column is 135° relative to the bottom.

Fig. 8B is a cross-sectional view of an illumination device 1B that has one light source device 4B arranged at each one of sidewalls of a regular triangular column, and a cylindrical diffusing plate 3B provided outside of the light source devices 3B. In the case of providing the three light source devices around the regular triangular column, a central angle θe of the regular triangular column and a half angle θf of the central angle are 120° and 60°, respectively, and an angle θ3 of the sidewall portion in parallel with the height direction of the regular triangular column is 150° relative to the bottom.

With the illumination device of the second embodiment of the present invention, an illumination device having a thinner cylindrical shape than that of the illumination device of the first embodiment can be obtained with a small number of light source devices. It should be noted that, by arranging the light source devices at two or multiple consecutive surfaces instead of arranging them at all sidewalls of the polygonal column, and by providing the diffusion plate outside of the light source devices, it is possible to employ an appearance in which the illumination device is provided on a part of the sidewall of the cylinder as in the case of the illumination device of the first embodiment.

### [Third Embodiment]

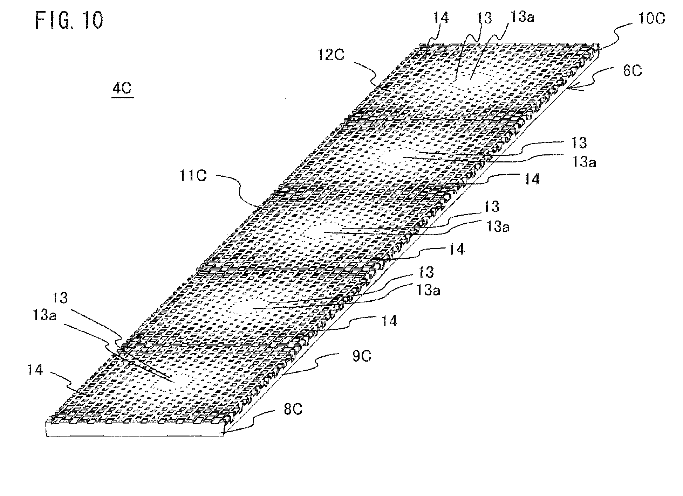

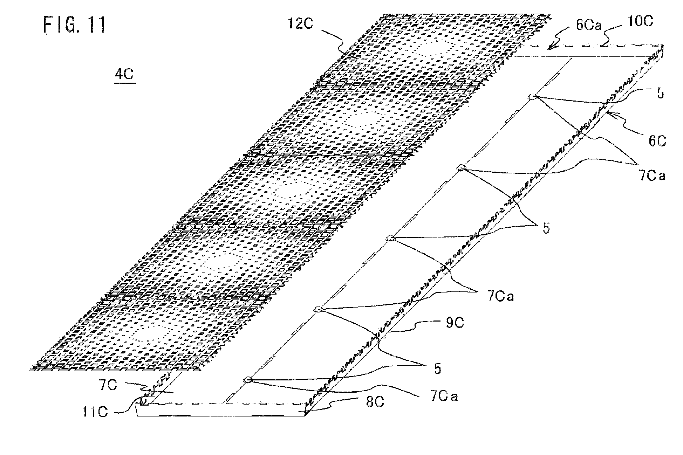

An illumination device according to a third embodiment of the present invention will be described using Figs. 9 to 11. Fig. 9 is a front view illustrating a state in which the illumination device according to the third embodiment is installed on a cylinder. Fig. 10 is a perspective view of a light source device constituting the illumination device of Fig. 9. Fig. 11 is an exploded perspective view of the light source device of Fig. 10.

The illumination device according to the third embodiment of the present invention has a different structure in the light source device from that of the first embodiment, but the other parts are common. Therefore, the same reference numerals are used for the common parts, and descriptions thereof will be omitted.

As illustrated in Fig. 9, an illumination device 1C is composed of a frame 2 installed on a convex curved surface such as a side face of a cylinder, a diffusion plate 3 inserted in an opening of the frame 2, and a plurality of light source devices 4C arranged in an adjacently connected manner inside the frame. Inside the frame 2, the plurality of light source devices are adjacently connected with each other in the circumferential direction without a space between the devices. As illustrated in Figs. 9 to 11, the light source device 4C is provided with point light sources 5 having high directionality and a housing 6C in which the plurality of point light sources 5 are arranged at predetermined intervals on the center line along the longitudinal direction of the light source device.

The housing 6C has an integrated structure of an assembly that is formed by adjacently connecting the light source devices according to the first embodiment in the height direction of the cylinder. The housing 6C has a bottom 7C, sidewall portions 8C to 11C, and an opening 6Ca, and is provided with a plurality of mounting holes 7Ca for mounting the point light sources 5 on the center line along the longitudinal direction of the bottom 7C. Note that the bottom 7C may serve as a ceiling surface or a sidewall surface depending on the installation state of the housing.

The light source devices 4C are arranged without a space therebetween on the outer wall surface of the cylinder as illustrated in Fig. 9. At this time, a pair of opposed sidewall portions 8C and 10C in parallel with the circumferential direction of the cylinder are arranged in a standing manner at an angle of 90° relative to the bottom. Note that this angle may be larger than 90°.

A pair of opposed sidewall portions 9C and 11C in parallel with the height direction of the cylinder are arranged in a standing manner at an angle θ1, where 90° < θ1 < 135°, relative to the bottom, as illustrated in Figs. 10 and 11. This angle is determined in the same manner as in the case of the light source device of the first embodiment.

The opening 6Ca of the housing 6C is covered with a transmissive/reflective plate 12C. In the present embodiment, as illustrated in Figs. 10 and 11, a center transmissive/reflective portion 13 corresponding to each of the point light sources 5 is provided directly above that particular point light source 5, and an outer transmissive/reflective portion 14 is provided around the outer perimeter of a center transmissive/reflective portion 13. A central part 13a is provided in a central portion of the center transmissive/reflective portion 13, that is, in the portion directly above the point light source 5.

Note that although the plurality of light source devices 4C are arranged in the circumferential direction of the cylinder in the present embodiment, a plurality of such multiple light source devices 4C may be arranged also in the height direction of the cylinder in an adjacently connected manner. Thus, by arranging the plurality of point light sources 5 in one unit of the light source device 4C, a light source device having a larger illumination area can be obtained. In addition, the light source device can have a simplified structure with a reduced number of parts, and can be manufactured easily at reduced manufacturing cost.

### [Fourth Embodiment]

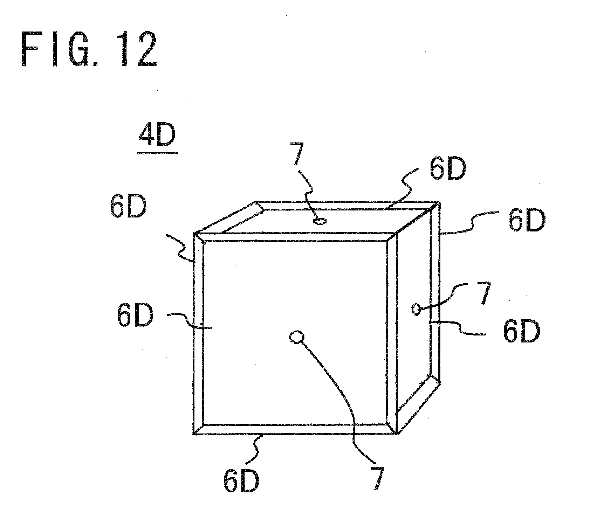

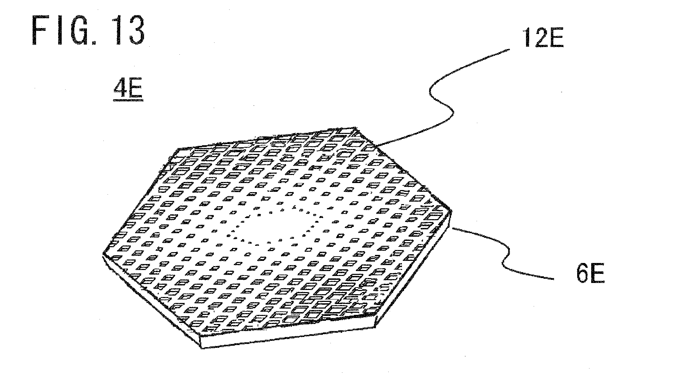

An illumination device according to a fourth embodiment of the present invention will be described using Figs. 12 and 13. Fig. 12 is a perspective view of an illumination device according to the fourth embodiment of the present invention, and Fig. 13 illustrates a variation of a light source device constituting the illumination device of Fig. 12.

The illumination device according to the fourth embodiment of the present invention has a different arrangement of light source devices from that of the second embodiment, but the other parts are common. Therefore, the same reference numerals are used for the common parts, and descriptions thereof will be omitted.

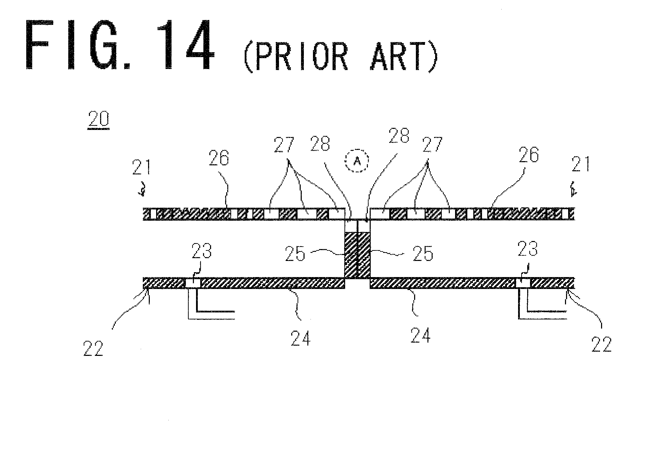

As illustrated in Fig. 12, an illumination device 1D is arranged with a total of six light source devices 4D, each of which being arranged on each face of a cube (not depicted). The light source devices 4D are adjacently connected so as to be in contact on sidewall portions thereof with each other. Note that, in Fig. 14, transmissive/reflective plates of the light source devices 4D are omitted, and only housings 6D are illustrated. That is, four of the light source devices 4D are adjacently connected in a transverse plane of the illumination device 1D, and also, four of the light source devices 4D are adjacently connected in a longitudinal plane of the illumination device 1D. A spherical diffusing plate (not depicted) is provided outside of the light source devices 4D. Because a light source device 4E and the diffusing plate have common structures with the light source device 4A and the diffusing plate 3 according to the second embodiment except the shape of the diffusing plate, detailed descriptions thereof are omitted. By using the above-described structure, a spherical-shaped illumination device that has a uniform illuminance distribution while using highly directional point light sources can be obtained, in which the adjacently connected portions of the light source devices are not darkened.

In the present embodiment, the light source device 4D has a square-shaped bottom and is arranged on each face of a cube. As a light source device 4E illustrated in Fig. 13, the bottom can have a regular hexagonal shape or other regular polygonal shape. By using such a light source device 4E, the light source device can be arranged on a larger spherical surface or a near-spherical convex curved surface, and thus, a spherical or hemispherical illumination device can be obtained. For example, an illumination device can be obtained by arranging a combination of the same type of light source devices having a regular hexagonal shape or a regular octagonal shape on a curved surface forming a larger sphere or a part of a sphere, or by arranging a combination of regular hexagon-shaped light source devices and regular pentagon-shaped light source devices in a soccer ball shape. In this way, by combining the plurality of light source devices that have a regular polygon-shaped bottom and transmissive/reflective plate, the light source devices can be arranged on various curved surfaces, and thus, illumination devices can be obtained.

### EXPLANATION OF REFERENCE NUMERALS

- 1, 1A, 1B, 1C, 1D, 1E: Illumination device
- 2: Frame
- 3, 3A, 3B, 3C: Diffusion plate
- 4, 4A, 4B, 4C, 4D, 4E: Light source device
- 5: Point light source
- 6, 6C: Housing
- 7: Bottom
- 8 to 11: Sidewall portion
- 12: Transmissive/reflective plate
- 13: Center transmissive/reflective portion
- 14: Outer transmissive/reflective portion
- 15: Light source unit
- 16a to 16f: Engaging claw
- 17a to 17f: Engaging groove

## Claims

1. A light source device capable of being used by adjacently connecting with each other in multiple, the light source device comprising:
a point light source having high directionality;
a box-shaped housing having a bottom to center of which the point light source is fixed, sidewall portions arranged in a standing manner from edges of the bottom up to a predetermined height, a side portion defining an opening provided facing the point light source, and a reflection member forming an inner wall surface of the housing; and
a transmissive/reflective plate covering the opening of the housing and being fixed at a circumference thereof to edges of the opening of the housing,
at least one of the sidewall portions that is in contact with a sidewall portion of another light source device being arranged in a standing manner at an angle 8, where 90° < θ ≤ 150°, relative to the bottom, and being provided with a light-transmitting hole on the side of the opening of the housing.

2. The light source device according to claim 1, wherein a first pair of opposed sidewall portions out of the sidewall portions are arranged in a standing manner at an angle θ, where 90° < θ ≤ 150°, relative to the bottom, a second pair of opposed sidewall portions adjacent to the first pair of opposed sidewall portions are arranged in a standing manner at an angle of 90° or more relative to the bottom, and the first pair of opposed sidewall portions and the second pair of opposed sidewall portions are each provided with the light-transmitting hole on the side of the opening of the housing.

3. The light source device according to claim 1, wherein an area of the light-transmitting hole is proportional to the angle θ relative to the bottom, and increases as the angle θ increases.

4. The light source device according to claim 1, wherein the transmissive/reflective plate includes a plate-shaped body that is provided on the side facing the point light source with a center transmissive/reflective portion and an outer transmissive/reflective portion around the center transmissive/reflective portion, the center transmissive/reflective portion and the outer transmissive/reflective portion are provided to have a high reflectance and a low transmittance, the outer transmissive/reflective portion is provided with a plurality of light-transmitting portions penetrating the transmissive/reflective plate, the plurality of light-transmitting portions in the outer transmissive/reflective portion are each a hole having a predetermined diameter or a slit having a predetermined width and length, and the size of the hole or the width and length of the slit increases as the hole or the slit departs outward from the center transmissive/reflective portion.

5. The light source device according to claim 1, wherein the transmissive/reflective plate includes a light reflective/diffusive/transmissive member.

6. The light source device according to claim 5, wherein the transmissive/reflective plate includes an ultrafinely foamed reflective member.

7. The light source device according to claim 6, wherein the housing and the transmissive/reflective plate are integrally formed from one sheet of base plate.

8. The light source device according to claim 1, wherein the opening of the housing is further provided on the light output side of the transmissive/reflective plate with a light diffusing plate in a manner covering the opening of the housing at a predetermined distance from the transmissive/reflective plate.

9. The light source device according to any one of claims 1 to 8, wherein the point light source is a light-emitting diode (LED) or a laser diode (LD).

10. An illumination device comprising:
the light source device as claimed in any one of claims 1 to 9 provided in plurality, the light source devices being adjacently connected with each other in such a manner that the sidewall portions forming the same angle θ relative to the bottom are in contact with each other.

11. The illumination device according to claim 10, wherein each of the light source devices has a regular polygonal shape for the bottom and the transmissive/reflective plate thereof, and the plurality of light source devices constitute the illumination device by being adjacently connected with each other to form a regular polyhedral shape, a spherical surface shape, or a spherical shape.

12. The illumination device according to claim 10, wherein each of the light source devices has a rectangular shape for the bottom and the transmissive/reflective plate thereof, and a plurality of such point light sources are arranged at predetermined intervals on the center line along the longitudinal direction of the bottom, and the plurality of light source devices constitute the illumination device by being adjacently connected with each other in a lateral direction to form a semicircular shape or a cylindrical shape so that the longitudinal direction of the light source devices corresponds to the vertical direction.

13. A display device comprising a display plate provided at an outer side of either the transmissive/reflective plate or the diffusion plate of the illumination device as claimed in claim 10.
